Europäisches Patentamt

European Patent Office

Office européen des brevets

(11) Veröffentlichungsnummer: **0 017 236**
**B1**

(12) **EUROPÄISCHE PATENTSCHRIFT**

(45) Veröffentlichungstag der Patentschrift:
13.04.83

(51) Int. Cl.³: **G 01 N 27/28**, G 01 N 27/30

(21) Anmeldenummer: 80101797.1

(22) Anmeldetag: 03.04.80

(54) Voltammetrie-Zelle und Verfahren zur Herstellung einer dafür geeigneten Messelektrode.

(30) Priorität: 07.04.79 DE 2914193

(43) Veröffentlichungstag der Anmeldung:
15.10.80 Patentblatt 80/21

(45) Bekanntmachung des Hinweises auf die Patenterteilung:
13.04.83 Patentblatt 83/15

(84) Benannte Vertragsstaaten:
CH FR GB LI

(56) Entgegenhaltungen:
CA-A-987 388
FR-A-2 101 676
US-A-4 090 926
JOURNAL OF THE ELECTROCHEMICAL SOCIE-TY, Band 118, no. 1, Januar 1971, D. TAU CHIN: »Anodic mechanis m of electrochemical machining: study of current transient on a rotating electrode«, Seiten 174—179
MESSTECHNIK, Band 76, September 1968. G. TRIMBORN: »Elektrolysezelle mit einer rotieren-den Doppelringelektrode für hohe Drehzahlen zur Messung schneller Reaktionen«, Seiten 224—229

(73) Patentinhaber: Kernforschungsanlage Jüllch Gesellschaft mit beschränkter Haftung, Postfach 1913, D-5170 Jülich (DE)

(72) Erfinder: Golimowski, Jerzy, Dr., Braclawska 4 m. 13, 04-044 Warszawa (PL)
Erfinder: Sipos, Laszlo, Dr., P. Simage 15, 41410 V. Gorica (Zagreb) (YU)
Erfinder: Valenta, Pavel, Dr., Oppenhoffallee 37, D-5100 Aachen (DE)

## Voltammetrie-Zelle und Verfahren zur Herstellung einer dafür geeigneten Meßelektrode

Die Erfindung bezieht sich auf eine Voltammetrie-Zelle mit einem Aufnahmegefäß für eine zu untersuchende Probe, mit einem abgedichtet auf das Aufnahmegefäß gesetzten Deckel,

— mit zwei vom Deckel getragenen Elektroden in Form einer Hilfs- und einer Referenzelektrode
— mit einer im Deckel vorgesehenen Durchführung für eine drehbare Meßelektrode
— mit am Deckel vorgesehenen Anschlüssen für die Elektroden

sowie auf ein Verfahren zur Herstellung einer dafür geeigneten Meßelektrode.

Die Spurenanalyse toxischer Stoffe in der Umwelt stellt an die Analyseneinrichtungen und Meßmethodik hohe Ansprüche. Für die Bestimmung einer Reihe von umwelt-toxischen Substanzen, wie von Schwermetallen, Herbiziden, Fungiziden und Insektiziden, hat sich die voltammetrische Methode als sehr erfolgreich erwiesen. In einigen Bereichen, wie z. B. der Meerwasser- und Wasserchemie, wird sie sogar bei der Bestimmung der erwähnten toxischen Stoffe gegenüber anderen Methoden bevorzugt.

Die erhöhten Ansprüche der Spurenbestimmung machen angemessene Ausrüstungen teurer und die Arbeitsweise aufwendiger, wobei insbesondere hohe Anforderungen bezüglich der Vermeidung von Kontaminationen der Analysenproben (z. B. durch die umgebende Atmosphäre beim Einbringen der Proben in die Zelle, die daher möglichst rasch und problemlos verschließbar sein soll) einerseits und der Säuberungsfähigkeit der Zellen andererseits gestellt werden (die aus Polytetrafluoräthylen oder Quarz hergestellt werden) und Möglichkeiten zur Variation der Elektroden erwünscht sind.

Handelsübliche Voltammetrie-Zellen haben daher auswechselbare Meßelektroden, die an eine entsprechende Durchführung eines dicht aufsetzbaren Deckels für die Zelle angeschlossen werden, die selbst (meist aus Quarzglas) kompakt gebaut und mit eingeschmolzenen Hilfselektroden, Einrichtungen zur Thermostatisierung, Gaseinleitungsrohren usw. versehen ist. Solche Zellen sind schwierig zu säubern und andererseits jedoch so teuer, daß ein Betrieb als »Wegwerf-Gerät« zu kostspielig wäre. Man kennt auch bereits Zellen, die leichter zu reinigen sind, bei denen alle erforderlichen Zuführungen im Deckel der Zelle vorgesehen sind, der auf das mit Dichtungsflansch versehene konische Gefäß zur Aufnahme der Analysenproben einfach aufgesetzt und durch einen Spannhebel festgelegt wird. Solche Gefäße sind zwar leichter zu reinigen und rasch zu verschließen, aber doch noch recht teuer.

Der Erfindung liegt daher die Aufgabe zugrunde, eine Voltammetrie-Zelle zu entwickeln, die den unterschiedlichen Anforderungen der Spurenanalyse besser gerecht wird als bislang bekannte Geräte und die insbesondere billiger und leichter zu reinigen ist und mit preisgünstigen verläßlichen Elektroden bestückt werden kann, so daß sich eine flexiblere Anpassung an die Bedürfnisse der Spurenanalyse auf breiter Basis ergibt.

Diese Aufgabe wird durch die erfindungsgemäße Voltammetrie-Zelle der eingangs genannten Art gelöst, die dadurch gekennzeichnet ist, daß die Meßelektrode (8) mittels eines Kupplungsstücks an einem durch die Durchführung (7) ragenden Stab austauschbar befestigt ist, wobei das Kupplungsstück bis unmittelbar unterhalb des Deckels (9) reicht, und daß innerhalb des Aufnahmegefäßes (1) ein auswechselbarer Analysentiegel (2) angeordnet ist, in den die Elektroden (5, 6, 8) eintauchen und der in eine seiner äußeren Kontur angepaßte Aussparung (3) im Boden des Aufnahmegefäßes (1) eingesetzt ist.

Eine solche Zelle ist zum einen schnell zu montieren und insbesondere rasch zu beschikken und zu verschließen sowie außerordentlich einfach im Aufbau und unterschiedlichen Bedingungen anpaßbar und zum anderen ist entweder die Reinigung der mit dem Untersuchungsmaterial in Berührung kommenden Teile erleichtert oder eine billige Massenproduktion möglich, so daß beispielsweise Einwegtiegel vorgesehen werden können. An das die eigentliche Zelle bildende Aufnahmegefäß für den Tiegel werden dagegen keine großen Anforderungen gestellt und es kann aus irgendeinem Material bestehen, das den Anforderungen bezüglich der Fertigung und den vorzusehenden Anschlüssen entspricht, und das leicht mit zweckmäßigen Zusatzeinrichtungen, wie Durchführungen oder Temperiereinrichtungen, versehen werden kann.

Vorzugsweise wird der Tiegel konisch ausgebildet und in eine konische Aussparung am Gefäßboden eingesetzt, die in einem auswechselbaren Einsatz für das Gefäß vorgesehen ist.

Gemäß der Erfindung wird weiter ein Verfahren zur Herstellung einer ankuppelbaren Meßelektrode vorgesehen, bei dem ein für die Bildung einer Meßelektrode mit Kupplungsstück geeigneter Metallstab bzw. ein solches Rohr, der bzw. das aus Elektrodenmaterial besteht oder an seinem Ende eine Elektrodenmaterialscheibe mittels eines leitfähigen Klebers aufgeklebt enthält, mit seinem freien Ende in härtbares Kunstharz bis zum Anhaften eines ausreichenden Harzklumpens getaucht, herausgezogen, durchgehärtet und auf die gewünschte Form abgedreht wird. Als Harz eignet sich dabei insbesondere ein unmodifiziertes lösungsmittelfreies und bei Zimmertemperatur festes Epoxidharz, das bei erhöhter Temperatur unter Zusatz von Härter verarbeitet wird, wie z. B. Araldit B® (ein Epoxidharz der Ciba AG, Basel); als Klebemittel hat sich E/Solder ACME® (ein leitfähiger Kleber auf Epoxidbasis mit hoher Bindefestigkeit und Leitfähigkeit der EPOXY PRODUKTE GmbH in Fürth) bewährt.

Beim Einbringen des zur Bildung der Elektrode mit Kupplungsstück und Zuleitung geeigneten Metallstabes (ggf. mit aufgeklebter Elektrodenscheibe) in das Kunstharz wird dabei durch eine zu diesem Zeitpunkt genügend dünnflüssige Beschaffenheit der zur Umhüllung angesetzten Harzmasse dafür gesorgt, daß die aus dem erhärteten Kunstharz herausgedrehte Ummantelung blasenfrei ist.

Ankuppelbare Elektroden mit Kunststoffummantelung sind zwar bekannt, diese werden jedoch bislang durch Einpressen von Elektrodenmaterialscheiben in ein der gewünschten äußeren Gestalt entsprechendes Kunststoffrohr hergestellt, wobei große Sorgfalt notwendig ist, so daß solche Elektroden recht teuer sind. Sie haben zudem den Nachteil, daß oft Störungen auftreten, die auf Verunreinigungen oder Abscheidungen am Rande der Scheibe längs der Grenzflächen zwischen Kunststoff und Scheibe zurückgehen. Solche Störungen können nur durch mühsames Polieren der Elektrode beseitigt werden.

Nachfolgend wird die Erfindung mehr im einzelnen anhand der Zeichungen beschrieben, es zeigt

Fig. 1 eine erfindungsgemäße Voltammetrie-Zelle mit angekuppeltem Motor,

Fig. 2a bis 2d eine Meßelektrode mit aufgeklebter Elektrodenmaterialscheibe in den einzelnen Herstellungsphasen.

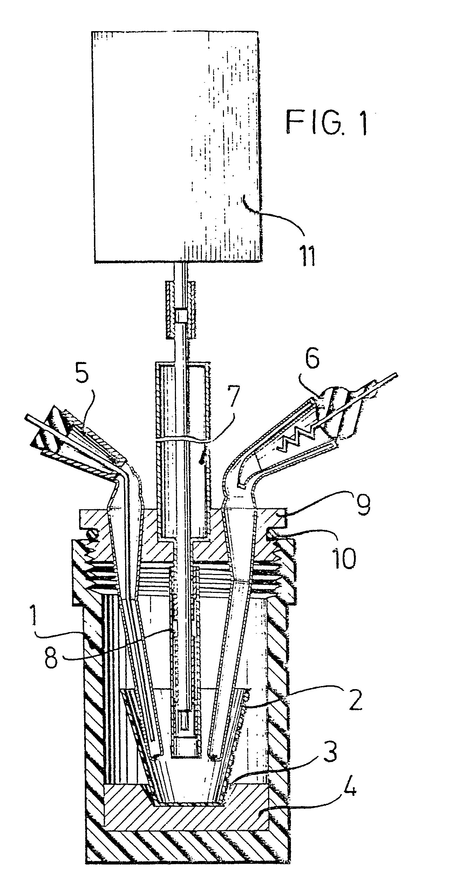

Gemäß Fig. 1 besteht die erfindungsgemäße Voltammetrie-Zelle aus einem (üblicherweise aus Kunststoff gebildeten) Aufnahmegefäß 1, in dem der Analysentiegel 2 zur Aufnahme des Analysengutes angeordnet wird. Zu diesem Zweck hat der Gefäßboden eine der Tiegelaußenform angepaßte Aussparung 3, die insbesondere durch einen entsprechenden Einsatz 4 gebildet werden kann.

Die Hilfs- und Referenzelektroden 5 und 6 und eine Durchführung für die ankuppelbare Meßelektrode sind in den Gefäßdeckel eingelassen, der über eine Dichtung für den Abschluß der Zelle sorgt. Durch 11 wird der Antriebsmotor für die Meßelektrode angedeutet.

Das Aufnahmegefäß 1 wird aus geeignetem Material hergestellt, das für die in der Zelle verwendeten Lösungsmittel inert ist. Der Analysentiegel kann aus Quarz oder Polytetrafluoräthylen bestehen oder auch einfacheren Materialien, wenn eine Säuberung nicht vorgesehen ist und keine Störungen durch die Tiegelwand zu befürchten sind. Im Tiegel werden üblicherweise alle chemischen Vorbereitungsoperationen, wie Aufschluß, Bestrahlung usw. unmittelbar durchgeführt.

Die an den Deckel 9 angekoppelte Meßelektrode ist ohne weiteres gegen eine andere Elektrode austauschbar, deren Elektrodenmaterial ggfs. der durchzuführenden Analyse besser angepaßt ist. Ein solcher Austausch bietet sich insbesondere dann an, wenn die Elektroden selbst preisgünstig sind und in angemessener Zahl zur Verfügung stehen und ggfs. geopfert werden können.

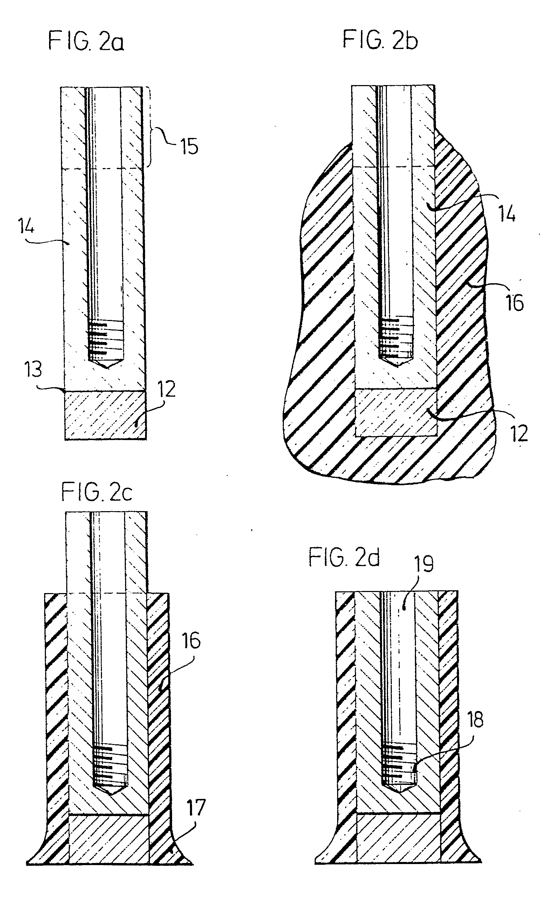

Die Herstellung solcher preisgünstigen Elektroden gemäß der Erfindung wird durch die Fig. 2a bis 2d veranschaulicht:

Gemäß Fig. 2a wird eine Scheibe 12 aus geeignetem Elektrodenmaterial mit einem leitfähigen Kleber 13 (wie »E/Solder-ACME®) auf einen für die Bildung des Kupplungsstückes geeigneten Hohlstab 14 (beispielsweise aus Edelstahl) aufgeklebt, dessen Länge diejenige der fertigen mit Kupplungsstück versehenen ankuppelbaren Meßelektrode um ein die Handhabung ermöglichendes Stück 15 übertrifft.

Diese Anordnung aus mit Elektrodenscheibe versehenem Hohlstab wird dann in ein klebendes härtbares Kunstharz (wie Araldit B®, ein Epoxidharz der Ciba AG, Basel) für einige Minuten getaucht, in denen eine Härtungsreaktion des Harzes von der Elektroden- und Staboberfläche her erfolgt unter Ausbildung eines anhaftenden zähviskosen Harzklumpens, der mit dem Stab aus der Harzmasse herausgezogen werden kann.

Nach der Entnahme aus der Harzmasse und Erhärtung des Materials bildet das am Stab haftende Harzmaterial praktisch eine etwa tropfenförmige Hülle (siehe Fig. 2b), aus der eine Elektrodenummantelung in der in Fig. 2c gezeigten Form herausgedreht werden kann, deren ausladende Endfläche 17 eine Verbesserung der Empfindlichkeit im Spurennachweis etwa um einen Faktor 2 mit sich bringt.

Abschließend wird der Stab auf die gewünschte Länge der mit Kupplungsstück versehenen Elektrode abgesägt und mit einem Gewinde oder Kupplungsorgan 18 innerhalb der Bohrung 19 versehen.

Elektroden der vorstehend beschriebenen Art haben praktisch keine mikroskopischen Hohlräume am Rand der Scheibe und reagieren wesentlich spontaner auf Reinigungsmaßnahmen als herkömmliche Elektroden vom weiter oben beschriebenen Typ.

## Patentansprüche

1. Voltammetrie-Zelle mit einem Aufnahmegefäß (1) für eine zu untersuchende Probe, mit einem abgedichtet auf das Aufnahmegefäß gesetzten Deckel (9),

— mit zwei vom Deckel getragenen Elektroden in Form einer Hilfs- und einer Referenzelektrode (5 bzw. 6)
— mit einer im Deckel vorgesehenen Durchführung (7) für eine drehbare Meßelektrode (8)
— mit am Deckel (9) vorgesehenen Anschlüssen für die Elektroden,

dadurch gekennzeichnet, daß die Meßelektrode (8) mittels eines Kupplungsstücks an einem durch die Durchführung (7) ragenden Stab austauschbar befestigt ist, wobei das Kupplungsstück bis unmittelbar unterhalb des Deckels (9) reicht, und daß innerhalb des Aufnahmegefäßes (1) ein auswechselbarer Analysentiegel (2) angeordnet ist, in den die Elektroden (5, 6, 8) eintauchen und der in eine seiner äußeren Kontur angepaßte Aussparung (3) im Boden des Aufnahmegefäßes (1) eingesetzt ist.

2. Zelle nach Anspruch 1, dadurch gekennzeichnet, daß die äußere Kontur des Tiegels (2) konisch ist und daß eine entsprechende konische Aussparung (3) am Gefäßboden in einem auswechselbaren Einsatz (4) für das Gefäß (1) vorgesehen ist.

3. Zelle nach Anspruch 1 oder 2, dadurch gekennzeichnet, daß die mit Kupplungsstück versehene ankuppelbare Meßelektrode (8) durch einen von Kunstharz ummantelten elektrisch leitenden (Hohl)Stab (14) mit einem Kupplungsorgan (18) einerseits und einer freiliegenden Stirnseite andererseits gebildet wird.

4. Zelle nach Anspruch 3, dadurch gekennzeichnet, daß die freiliegende Stirnseite durch die freie Seite einer auf den noch nicht ummantelten (Hohl)Stab (14) mit elektrisch leitendem Kleber (13) aufgeklebten Elektrodenmaterialscheibe (12) gebildet wird.

5. Verfahren zur Herstellung einer ankuppelbaren Meßelektrode nach Anspruch 3, dadurch gekennzeichnet, daß man einen zur Bildung der Elektrode mit Kupplungsstück geeigneten ggf. hohlen Metallstab mit seinem freien Ende in einer zur Bildung des Kunststoffmantels gewünschten Länge in härtendes Kunstharz taucht und die von erhärtetem anhaftenden Harz umgebene Anordnung wieder herauszieht und nach dem Aushärten auf die gewünschte Form mit in der Endfläche freiliegender Elektrodenfläche abdreht.

6. Verfahren nach Anspruch 5, dadurch gekennzeichnet, daß als Harz ein unmodifiziertes, lösungsmittelfreies, bei Zimmertemperatur festes Epoxidharz mit Härter verwendet wird.

7. Verfahren nach Anspruch 5, dadurch gekennzeichnet, daß man einen Metallstab mit stirnseitig aufgeklebter Elektrodenmaterialscheibe verwendet.

## Claims

1. Voltammetry cell with a receiving vessel (1) for a sample to be analysed, with a cover (9) placed sealingly onto the receiving vessel, with two electrodes in the form of an auxiliary electrode (5) and a reference electrode (6) which are carried by the cover, with a duct (7) provided in the cover for a rotatable measuring electrode (8), and with connections provided on the cover (9) for the electrodes, characterised in that the measuring electrode (8) is fastened exchangeably by means of a coupling piece to a bar projecting through the duct (7), the coupling piece extending directly below the cover (9), and in that located within the receiving vessel (1) is an exchangeable analytical dish (2) into which the electrodes (5, 6, 8) are inserted and which is introduced into a recess (3) matching its outer contour in the bottom of the receiving vessel (1).

2. Cell according to Claim 1, characterised in that the outer contour of the dish (2) is conical, and in that a corresponding conical recess (3) is provided at the vessel bottom in an exchangeable insert (4) for the vessel (1).

3. Cell according to Claim 1 or 2, characterised in that the couplable measuring electrode (8) provided with a coupling piece is formed by an electrically conductive (hollow) bar (14) sheathed in synthetic resin and having a coupling member (18), on the one hand, and an exposed end face, on the other hand.

4. Cell according to Claim 3, characterised in that the exposed end face is formed by the free side of a disc of electrode material (12) glued onto the not jet sheathed (hollow) bar (14) by means of electrically conductive adhesive (13).

5. Process for producing a couplable measuring electrode according to Claim 3, characterised in that the free end of a possibly hollow metal bar suitabel for forming the electrode with a coupling piece is inserted into hardening synthetic resin over a length desired for forming the synthetisc sheath, and the arrangement surrounded by hardened adhering resin is drawn out again and, after curing, is turned on a lathe to the desired shape with the electrode surface exposed on the end face.

6. Process according to Claim 5, characterised in that a non-modified solvent-free epoxy resin, solid at room temperature, with a hardener is used as a resin.

7. Process according to Claim 5, characterised in that a metal bar with a disc of electrode material glued onto the end face is used.

## Revendications

1. Cellule de voltampérométrie comprenant un récipient de réception (1) pour un échantillon à étudier, un couvercle (9) posé de manière étanche sur le récipient de réception,

— deux électrodes portées par le couvercle sous forme d'une électrode auxiliaire (5) et d'une électrode de référence (6),
— une traversée (7) prévue dans le couvercle pour une électrode de mesure (8) tournante,
— des connexions prévues sur le couvercle (9) et destinées aux électrodes,

caractérisée en ce que l'électrode de mesure (8) est fixée de manière échangeable à un barreau faisant saillie dans la traversée (7) au moyen d'une pièce d'accouplement qui va jusque juste en-dessous du couvercle (9), et en ce que dans le récipient de réception (1) est placé un creuset d'analyses (2) pouvant être échangé, dans lequel les électrodes (5, 6, 8) plongent et qui est introduit dans un évidement (3) ménagé dans le fond du récipient de réception (1) et adapté au contour extérieur du creuset.

2. Cellule suivant la revendication 1, caractérisée en ce que le contour extérieur du creuset (2) est conique et en ce qu'un évidement (3) conique correspondant est prévu sur le fond du récipient dans une pièce rapportée (4) échangeable du récipient (1).

3. Cellule suivant la revendication 1 ou 2, caractérisé en ce que l'électrode de mesure (4), qui peut être accouplée et qui est munie de la pièce d'accouplement, est formée d'un barreau (creux) (14) conducteur de l'électricité gainé de résine en matière plastique ayant un organe d'accouplement (18) d'une part et une partie frontale dégagée d'autre part.

4. Cellule suivant la revendication 3, caractérisée en ce que la partie frontale dégagée est formée de la face dégagée d'un disque (12) en matière pour électrode collé par une colle (13) conductrice de l'électricité sur le barreau (creux) (14) avant que celui-ci ne soit gainé.

5. Procédé de fabrication d'une électrode de mesure pouvant être accouplée suivant la revendication 3, caractérisé en ce qu'il consiste, pour former l'électrode ayant une pièce d'accouplement, à plonger un barreau métallique, éventuellement creux, par son extrémité libre dans une résine synthétique durcissante en une longueur convenante à la formation de la gaine en matière plastique, à enlever l'agencement entouré de la résine adhérente durcie et, après le durcissement, à mettre par passage au tour à la forme souhaitée avec une surface d'électrode dégagée dans la face d'extrémité.

6. Procédé suivant la revendication 5, caractérisé en ce qu'il consiste à utiliser comme résine une résine époxyde non modifiée, solide à la température ambiante et exempte de solvants, ainsi qu'un durcisseur.

7. Procédé suivant la revendication 5, caractérisé en ce qu'il consiste à utiliser un barreau métallique ayant un disque en matière pour électrode collé du côté frontal.

FIG. 1

FIG. 2a

FIG. 2b

FIG. 2c

FIG. 2d